# FASCICULE DE BREVET EUROPEEN

(11) **EP 2 599 284 B1**
(45) Date de publication et mention de la délivrance du brevet: **28.02.2018**
(21) Numéro de dépôt: 11752265.6
(22) Date de dépôt: 21.07.2011
(51) Int. Cl.: G06F 9/54, H04L 29/08, G06F 17/30

(54) **COMMUNICATION DE DONNÉES ENTRE MODULES**
DATENKOMMUNIKATION ZWISCHEN MODULEN
DATA COMMUNICATION BETWEEN MODULES

(30) Priorité: 28.07.2010 FR 1056220
(43) Date de publication de la demande: 05.06.2013
(73) Titulaire: Orange, 75015 Paris (FR)
(72) Inventeur: GIRAUD, Jérôme, F-14000 Caen (FR); VAN DEN BOSSCHE, Julien, F-14970 Benouville (FR)
(86) Numéro de dépôt international: PCT/FR2011/051762
(87) Numéro de publication internationale: WO 2012/013893

(56) Documents cités:
- EP-A1- 2 169 569
- WO-A1-2004/010322
- WO-A1-2009/018375
- WO-A2-2007/047765
- WO-A2-2009/029404
- US-A1- 2007 256 003
- US-A1- 2008 098 101
- US-A1- 2008 294 716
- US-A1- 2009 037 517
- US-A1- 2009 327 421
- US-B1- 7 346 649

## Description

La présente invention se rapporte de manière générale à la communication de données entre modules, et plus particulièrement à l'échange locale de données entre pages web chargées dans un même navigateur.

De nombreux services sont aujourd'hui mis à disposition d'un utilisateur par l'intermédiaire d'applications web, dont les pages sont accessibles à l'aide d'un navigateur. Or il serait particulièrement avantageux de partager efficacement des informations, propres à l'utilisateur, entre les pages de plusieurs applications web, notamment lorsque ces dernières sont hébergées sous différents domaines. Une page web appartenant au domaine « www.abc.fr » pourrait ainsi utilement exploiter, par exemple en l'affichant sous une forme adaptée, une partie des données, propres à un utilisateur, collectées par une autre page web appartenant au domaine « www.def.net ». De tels échanges de données sont déjà connus des demandes de brevet suivantes: WO2009/029404, US2007/0256003, US2008/098101, WO2009/018375, US2008/294716. Typiquement, une telle communication de données entre pages web ne peut être mise en oeuvre qu'en partageant l'accès à des bases de données communes. Cette approche n'est toutefois pas satisfaisante notamment lorsque les pages sont hébergées sous différents domaines et sont exploités par divers acteurs. En effet, une entité tierce doit alors intervenir, posant notamment des problèmes de performance, de configuration, de sécurité et d'adaptabilité.

Il existe donc un besoin pour partager des données entre les pages web d'une pluralité d'applications web, notamment lorsque ces dernières appartiennent à différents domaines, sans recourir à une entité distante, c'est-à-dire localisée hors de l'ordinateur utilisé pour accéder auxdites pages web.

La présente invention vise à améliorer la situation.
Selon un premier aspect, il est proposé un procédé d'émission depuis un module émetteur d'un ensemble de données à destination d'un module destinataire. Le module émetteur est associé à un premier domaine de navigation. Le module destinataire est associé à un deuxième domaine de navigation. Le module émetteur et le module destinataire sont adaptés à être chargés dans un module de navigation. Le module de navigation dispose d'une base de données locale conçue pour permettre:
- l'enregistrement de données à chaque module chargé dans le module de navigation; et,
- l'accès aux données enregistrées par un ou plusieurs modules associés à un même domaine de navigation, à tout module chargé dans le module de navigation associé également audit même domaine de navigation.

Le procédé comporte les étapes suivantes :
- chargement, par le module de navigation, d'une première page Web appartenant au premier domaine de navigation et du module émetteur;
- chargement, par le module de navigation, d'un module de stockage associé à un troisième domaine de navigation auquel est associé également un module de réception adapté pour permettre au module destinataire d'accéder à la base de données locale, le chargement du module de stockage étant provoqué par la présence dans la première page Web d'une référence au troisième domaine de navigation;
- stockage par le module de stockage de l'ensemble de données, dans la base de données locale.

Le module de navigation dispose d'un mode de stockage local sécurisé, puisque l'accès aux données stockées dans la base de données est seulement autorisé aux modules associés au même domaine que le module qui a procédé à l'enregistrement desdites données. Un tel mode de stockage local est notamment proposé dans les navigateurs web supportant le standard HTML5 décrit dans le document « HTML5 - A vocabulary and associated APIs for HTML and XHTML », W3C Working Draft, 4 March 2010. Le module émetteur, qui est par exemple un script associé à une page web appartenant au premier domaine, ne peut donc pas enregistrer directement dans la base de données l'ensemble de données de sorte à ce que ce dernier soit accessible à un module destinataire, associé par exemple à une page web appartenant à un deuxième domaine, distinct du premier domaine. C'est pourquoi, le module émetteur utilise pour enregistrer l'ensemble de données, dans la base de données locale, un module de stockage associé à un troisième domaine. Le module destinataire utilise quant à lui le module de réception, associé à ce troisième domaine, pour accéder à la base de données locale. Ainsi, l'ensemble de données peut être partagé entre le module émetteur et le module destinataire, en toute sécurité, par l'intermédiaire des modules de stockage et de réception associés au même domaine. Le partage de l'ensemble de données ne nécessite donc pas l'usage d'une entité tierce disposée hors du module de navigation. De plus, l'ensemble de données étant stockée localement, aucun échange de données, coûteux en temps et en bande passante, n'est nécessaire. En outre, le procédé peut être mis en oeuvre en utilisant les fonctionnalités offertes par le module de navigation.
Dans un mode de réalisation, le module émetteur insert dynamiquement ladite référence dans la première page Web.
Dans un mode de réalisation, ladite référence est une référence à une deuxième page Web, contenant le code du module de stockage, destinée à être téléchargée puis interprétée par le module de navigation. La deuxième page Web peut notamment appartenir au troisième domaine de navigation, ou l'ensemble des données à transférer peut être extrait de la première page Web.
Selon un deuxième aspect, il est proposé un procédé de réception par un module destinataire d'un ensemble de données émis par un module émetteur. Le module émetteur est associé à un premier domaine de navigation. Le module destinataire appartenant est associé à un deuxième domaine de navigation. Le module émetteur et le module destinataire sont adaptés à être chargés dans un module de navigation. Le module de navigation dispose d'une base de données locale conçue pour permettre:
- l'enregistrement de données à chaque module chargé dans le module de navigation; et,
- l'accès aux données enregistrées par un ou plusieurs modules associés à un même domaine de navigation, à tout module chargé dans le module de navigation associé également audit même domaine de navigation.

Le procédé comporte les étapes suivantes :
- chargement, par le module de navigation, d'une première page Web appartenant au deuxième domaine de navigation, et du module destinataire;
- chargement, par le module de navigation, d'un module de réception associé à un troisième domaine de navigation auquel est associé également un module de stockage adapté pour permettre au module émetteur d'accéder à la base de données locale, le chargement du module de réception étant provoqué par la présence dans la première page Web d'une référence au troisième domaine de navigation;
- lecture par le module de réception de l'ensemble des données reçu, dans la base de données locale.
Dans un mode de réalisation, le module destinataire insert dynamiquement ladite référence dans la première page Web.
Dans un mode de réalisation, ladite référence est une référence à une deuxième page Web, contenant le code du module de stockage, destinée à être téléchargée puis interprétée par le module de navigation. La deuxième page Web peut appartenir au troisième domaine de navigation ou l'ensemble des données à transférer peut être extrait de la première page Web.
Selon un troisième aspect, il est proposé un dispositif de navigation pour la mise en oeuvre d'un procédé d'émission depuis un module émetteur d'un ensemble de données à destination d'un module destinataire. Le module émetteur est associé à un premier domaine de navigation. Le module destinataire est associé à un deuxième domaine de navigation. Le dispositif de navigation comprend un module de navigation disposant d'une base de données locale conçue pour permettre:
- l'enregistrement de données à chaque module chargé dans le module de navigation; et,
- l'accès aux données enregistrées par un ou plusieurs modules associés à un même domaine de navigation, à tout module chargé dans le module de navigation associé également audit même domaine de navigation.
Le module de navigation comprend :
- des moyens de chargement d'une première page Web appartenant au premier domaine de navigation et du module émetteur;
- des moyens de chargement d'un module de stockage conçu pour stocker l'ensemble de données dans la base de données locale, le module de stockage étant associé à un troisième domaine de navigation auquel est associé également un module de réception adapté pour permettre au module destinataire d'accéder à la base de données locale, le chargement du module de stockage étant déclenché par la présence dans la première page Web d'une référence au troisième domaine de navigation.
Selon un quatrième aspect, il est proposé un dispositif de navigation pour la mise en oeuvre d'un procédé de réception par un module destinataire d'un ensemble de données émis par un module émetteur. Le module émetteur est associé à un premier domaine de navigation. Le module destinataire est associé à un deuxième domaine de navigation. Le dispositif de navigation comprend un module de navigation disposant d'une base de données locale conçue pour permettre:
- l'enregistrement de données à chaque module chargé dans le module de navigation; et,
- l'accès aux données enregistrées par un ou plusieurs modules associés à un même domaine de navigation, à tout module chargé dans le module de navigation associé également audit même domaine de navigation.
Le module de navigation comprend:
- des moyens de chargement d'une première page Web appartenant au deuxième domaine de navigation et du module destinataire;
- des moyens de chargement d'un module de réception, conçu pour lire l'ensemble des données reçu dans la base de données locale et associé à un troisième domaine de navigation auquel est associé également un module de stockage adapté pour permettre au module émetteur d'accéder à la base de données locale, le chargement du module de réception étant déclenché par la présence dans la première page Web d'une référence au troisième domaine de navigation.

Dans un mode particulier de réalisation, les différentes étapes du procédé selon le premier, deuxième et cinquième aspects sont déterminées par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des étapes les différentes étapes des procédés qui viennent d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre, par un schéma de principe, un terminal ;
- la figure 2 illustre, par un schéma de principe, un environnement logiciel, comprenant un module de navigation adapté pour charger un premier et deuxième contexte de navigation, selon un mode de réalisation ;
- la figure 3 montre, par un synoptique, les étapes principales d'un procédé de communication de données selon un mode de réalisation,
- les figures 4a, 4b, 4c, 4d, 4e, 4f montrent, par des schémas de principe, un module de navigation.

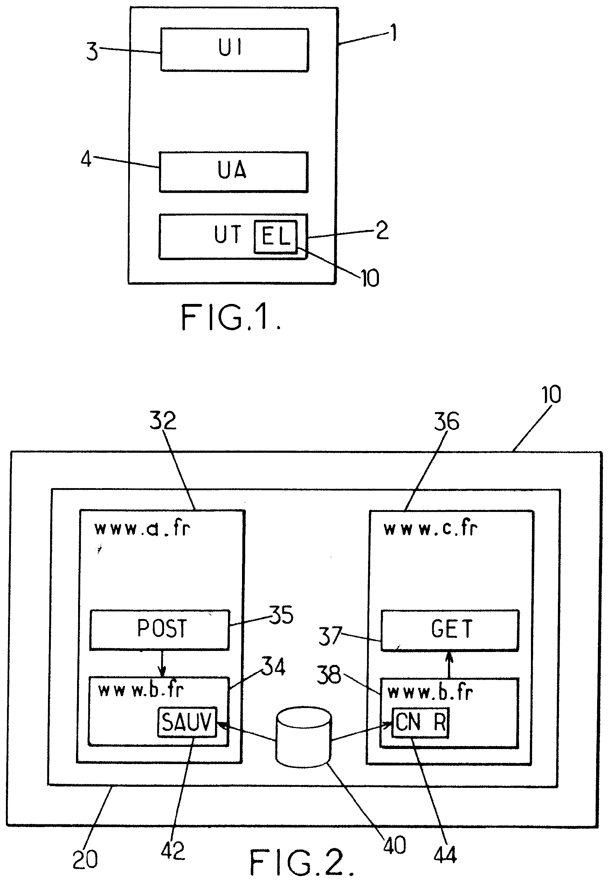

Dans la présente description, et comme illustré sur la figure 1, on considère un terminal 1 comportant une unité de traitement 2 et une interface utilisateur 3. Le terminal 1 comporte une unité d'accès à un réseau 4. L'unité de traitement 2 comporte des moyens de calcul et de mémorisation pour mettre en oeuvre un environnement logiciel 10. L'environnement logiciel 10 est typiquement composé d'un micrologiciel autonome ou « firmware » en anglais, d'un gestionnaire de démarrage ou « boot loader » en anglais, d'un système d'exploitation comprenant des composants logiciels. A titre d'exemple non limitatif, le système d'exploitation peut être un système d'exploitation pour terminal mobile. L'interface utilisateur 3 permet à l'utilisateur d'interagir avec le terminal 1. L'unité d'accès à un réseau 4 permet par exemple au terminal 1 d'accéder à Internet via différents réseaux de communications, comme par exemple un réseau de téléphonie mobile, un réseau informatique, ou un réseau satellitaire. Le terminal 1 est typiquement un équipement mobile portable comme un téléphone mobile ou un ordinateur.

Comme représenté à la figure 2, l'environnement logiciel 10 est adapté pour exécuter un module de navigation 20. Le module de navigation 20 a notamment pour fonction de permettre à un utilisateur d'accéder et d'interagir avec un ensemble de pages d'une application. Plus particulièrement, le module de navigation 20 permet de télécharger des pages Web mettant en oeuvre une application web, ces pages appartenant à un domaine de navigation et étant fournies par un serveur de gestion du domaine de navigation en question. Le module de navigation 20 comporte dans ce but au moins un client apte à communiquer selon le protocole de transfert hypertexte ou en anglais « HyperText Transfer Protocol » (HTTP) avec un serveur distant HTTP. De telles pages sont décrites par exemple en langage hypertexte de balisage ou en anglais « Hypertext Markup Language » (HTML). Des données de formatage de page, nommées feuilles de style, usuellement codées au format CSS (Cascading Style Sheet), sont jointes à cette page codée en HTML. La page HTML contient en outre (ou est transmise avec) des codes de programme, usuellement sous forme de Javascript, destinés à être interprétés et exécutés par le module de navigation lors du chargement de la page.

Le module de navigation 20 comporte ainsi un moteur pour interpréter le code HTML, les données de formatage et les codes de programme, afin d'exécuter les fonctions codées par les codes de programme, puis de générer, mettre en forme et afficher les pages Web téléchargées.

La notion de domaine de navigation est à interpréter au sens large: il s'agit d'un domaine Web ou pages ayant un même nom de domaine. Par exemple, toutes les pages dont l'URL contient www.xxxx.fr et/ou www.xxxx.com et/ou bbb.xxxx.com, où "xxxx" représente le nom du domaine en question.

En outre, les termes « local » et « localement » sont à considérer par rapport au module de navigation 20 et ses composants. Ainsi une donnée stockée localement correspond, par la suite, à une donnée accessible directement par le module de navigation 20, sans faire appel ni à une entité distante hors de l'environnement logiciel 10 comme un serveur web distant, ni à une entité exécutée dans l'environnement logiciel 10 mais supportée par des processus non initiés par le module de navigation 20, comme un serveur de base de données exécuté dans l'environnement logiciel dans un processus n'appartenant pas au module de navigation 20.

Dans la suite de la description, les références au langage HTML se rapporte au langage HTML5, spécifié dans le standard « HTML5 - A vocabulary and associated APIs for HTML and XHTML », W3C Working Draft, 4 March 2010.

Ce document définit notamment la notion de "contexte de navigation" (browsing context) comme étant un environnement dans lequel un document est présenté à l'utilisateur. Par exemple, chaque fenêtre ou chaque onglet d'un navigateur présente à l'utilisateur un contexte de navigation et sert à présenter une succession de documents ou pages Web à cet utilisateur.

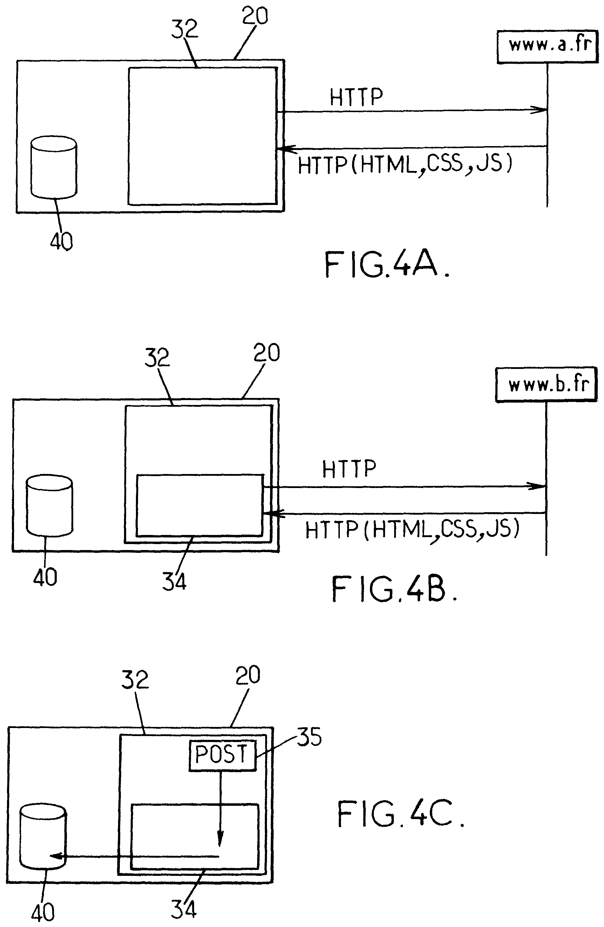

Dans l'exemple illustré sur la figure 2 et sur la figure 4A, le module de navigation 20 présente à l'utilisateur un premier contexte de navigation 32: le module de navigation 20 émet une requête HTTP vers un premier serveur de gestion de domaine Web et télécharge en retour au moins une première page. Cette première page est écrite, au moins partiellement, en langage HTML, et appartient à un premier domaine « www.a.fr ». Cette première page met en oeuvre une première application web.

A réception de cette première page, le module de navigation 20 interprète le code HTML décrivant cette première page.

Des codes de programme d'un module émetteur 32 de données sont inclus dans cette première page ou sont transmis par le serveur de gestion de ce premier domaine avec cette première page. Ce module émetteur est chargé et exécuté par le module de navigation 20, c'est-à-dire que les codes de programmes du module émetteur sont chargés en mémoire, interprétés et exécutés par le module de navigation.

L'utilisateur peut interagir classiquement avec la première page, en particulier pour prendre connaissance des informations présentées, communiquer de nouvelles données, par exemple à l'aide de formulaires, ou demander l'exécution de certaines tâches à la première application web.

Selon une première alternative de réalisation de l'invention, cette première page contient en outre une référence à un deuxième domaine de navigation.

Selon une deuxième alternative de réalisation de l'invention, le module émetteur insert dynamiquement dans la première page une référence à un deuxième domaine de navigation. Suite à cette insertion, la première page contient cette référence.

Dans la première ou la deuxième alternative, la référence au deuxième domaine de navigation est codée dans la page HTML au moyen d'une balise XML, de type "iframe", telle que définit dans le standard HTML5, contenant au moins une identification d'une page Web (attribut « src » dans le standard HTML5), sous forme par exemple d'URL.

Comme illustré à la figure 4B, une telle référence sert à instancier un sous-contexte de navigation: sa présence dans la première page Web provoque l'émission, par le module de navigation 20, d'une requête HTTP (figure 4B) vers le serveur de gestion de ce deuxième domaine de navigation et le chargement par le module de navigation 20 d'une deuxième page Web appartenant à ce deuxième domaine, en l'occurrence la page identifiée dans la balise .

Cette référence est par exemple sous la forme suivante:
<iframe src = « www.b.fr /page1»></iframe>
où « www.b.fr » identifie le deuxième domaine de navigation.

Une telle référence incorpore par référence une page web dans une autre.

La deuxième page est écrite, au moins partiellement, en langage HTML.

Des codes de programme d'un module de stockage 34 de données sont inclus dans cette deuxième page ou sont transmis par le serveur de gestion de ce deuxième domaine avec les données HTML de cette deuxième page. Ce module de stockage 34 est chargé et exécuté par le module de navigation 20, c'est-à-dire que les codes de programmes du module de stockage sont chargés en mémoire, interprétés et exécutés par le module de navigation.

Il est à noter que la deuxième page ne comporte pas nécessairement d'informations à présenter à l'utilisateur, et peut donc ne pas être affichée. Dans ce cas en effet, la présentation de la première page n'est pas modifiée par la présence de la référence "iframe". A l'inverse, il pourrait être prévu que la présentation de la première page soit modifiée, par exemple par ajout d'un logo ou autre signe, indicateur de la possibilité de transmettre des données contenues dans cette première page vers une autre page Web.

La première page comporte en outre en ensemble de données A à sauvegarder localement. Ces données peuvent être des données intégrées dans la page HTML transmise au module de navigation et/ou des données ayant été saisies dans cette première page par un utilisateur.

Comme illustré à la figure 4C, le module émetteur 32 comprend un module de transfert 35 adapté pour transférer l'ensemble de données A, au module de stockage 34 associé à la deuxième page appartenant au deuxième domaine. Pour cela, le module de transfert 35 dialogue au moyen du protocole HTTP avec le module de stockage 34 afin de lui transférer l'ensemble de données A.

Le module de stockage 34 reçoit donc du module de transfert 35 l'ensemble de données A à enregistrer. Le module de stockage comporte un sous-module, dit module de sauvegarde locale 42, conçu pour accéder à la base de données locale 40 et adapté pour enregistrer localement des données dans la base de données locale 40. Ainsi, sur réception de l'ensemble des données A, le module de sauvegarde locale 42, associé tout comme le module de stockage 34 au deuxième domaine, peut sauvegarder localement l'ensemble de données A, en utilisant une base de données locale 40 comprise dans le module de navigation 20. La base de données locale 40 est adaptée pour stocker, au sein du module de navigation 20, de manière persistante, des données. En particulier, la base de données locale 40 implémente une interface conforme à la spécification du W3C intitulée « Web Storage », notamment dans sa version « Editor's Draft » du 14 April 2010.

La base de données locale 40 est configurée pour :
- permettre à tout module chargé dans le module de navigation d'enregistrer des données;
- autoriser l'accès aux données enregistrées par un ou plusieurs modules associés à un domaine de navigation, uniquement à un module chargé dans le module de navigation associé également audit même domaine de navigation.

Ainsi, l'accès aux données stockées par le module de stockage 34 ne sera autorisé qu'aux modules logiciels dont les codes de programme sont contenus dans ou associés à une page appartenant au deuxième domaine, ou éventuellement à un sous-domaine de ce deuxième domaine. Ainsi, dans l'exemple de la figure 2, l'ensemble de données A ayant été enregistré dans la base de données locale 40 par le module de stockage 34 associé à la deuxième page appartenant à ce deuxième domaine, seuls les modules logiciels dont les codes de programme sont contenus dans ou associés à une page appartenant à ce deuxième domaine, ou éventuellement à un sous-domaine de deuxième domaine, comme par exemple « bbb.b.fr », peuvent accéder à l'ensemble de données A via la base de données locale 40. En particulier, aucun module associé à la première page appartenant au premier domaine « www.a.fr » ne peut demander à la base de données locale 40 l'extraction de l'ensemble de données A stocké.

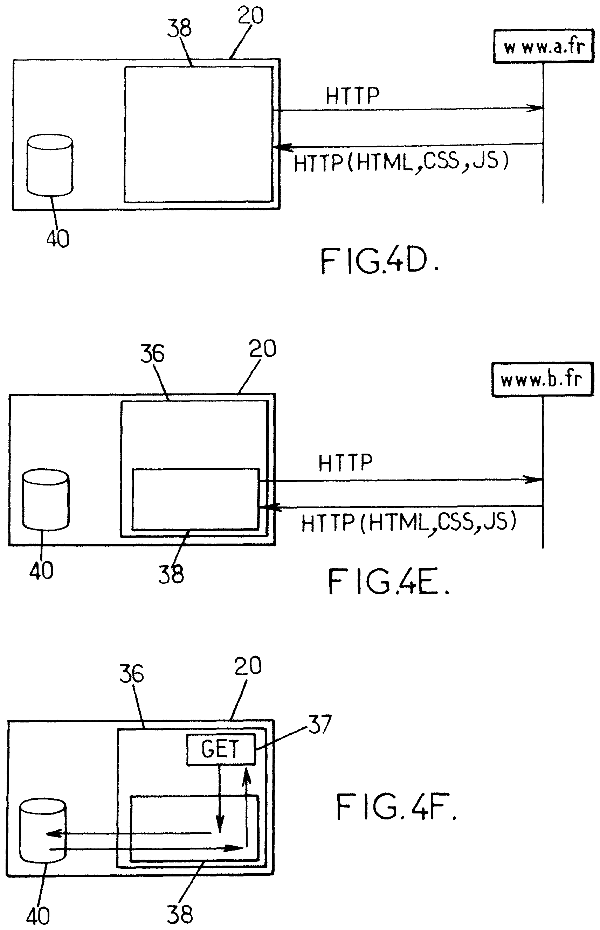

Comme illustré à la figure 4D, le module de navigation 20 présente à l'utilisateur un deuxième contexte de navigation 36: le module de navigation émet une requête HTTP vers un deuxième serveur de gestion de domaine Web et télécharge en retour au moins une troisième page. Cette troisième page est écrite, au moins partiellement, en langage HTML, et appartient à un troisième domaine, par exemple « www.c.fr ». Cette troisième page met en oeuvre une deuxième application web en coopération avec le serveur de gestion de ce troisième domaine.

L'utilisateur peut interagir classiquement avec la deuxième page, en particulier pour prendre connaissance des informations présentées, communiquer de nouvelles données, par exemple à l'aide de formulaires, ou demander l'exécution de certaines tâches à la première application web.

Sur la figure 2, par souci de clarté, le module de navigation 20 est représenté contenant simultanément le premier et le deuxième contexte de navigation. Ce cas peut se présenter notamment lorsque le module de navigation supporte la consultation d'une pluralité de contextes de navigation simultanément (par exemple sous la forme d'une pluralité d'onglet comprenant chacun un contexte de navigation différent) et lorsque l'utilisateur accède simultanément à la première application web et à la deuxième application web. Toutefois, cet exemple n'est en rien limitatif. En particulier, l'utilisateur peut tout autant utiliser le module de navigation 20 pour, dans un premier temps accéder à la première application web puis, après avoir quitté cette dernière, accéder dans un deuxième temps à la deuxième application web. Ainsi, dans cet exemple, le module de navigation 20 ne comprend, à un instant donné, qu'un seul contexte de navigation.

A réception de cette troisième page, le module de navigation 20 interprète le code HTML décrivant cette troisième page.

Des codes de programme d'un module destinataire 36 de données sont inclus dans cette troisième page ou sont transmis par le serveur de gestion de ce troisième domaine avec cette troisième page. Ce module destinataire 36 est chargé et exécuté par le module de navigation 20, c'est-à-dire que les codes de programmes du module émetteur sont chargés en mémoire, interprétés et exécutés par le module de navigation.

Selon une première alternative de réalisation de l'invention, cette troisième page contient en outre une référence au deuxième domaine de navigation.

Selon une deuxième alternative de réalisation de l'invention, le module destinataire 36 insère dynamiquement dans la troisième page une référence au deuxième domaine de navigation.

Dans la première ou la deuxième alternative, la référence au deuxième domaine de navigation est codée dans la page HTML au moyen d'une balise XML, de type "iframe", telle que définit dans le standard HTML5, contenant au moins une identification d'une page Web (attribut « src » dans le standard HTML5), sous forme par exemple d'URL.

Comme illustré à la figure 4E, une telle référence sert à instancier un sous-contexte de navigation: sa présence dans la troisième page Web provoque l'émission, par le module de navigation 20, d'une requête HTTP vers le serveur de gestion de ce deuxième domaine de navigation et le chargement par le module de navigation 20 d'une quatrième page Web appartenant à ce deuxième domaine, en l'occurrence la page identifiée dans la balise .

Cette référence est par exemple sous la forme suivante:
<iframe src = « www.b.fr /page2»></iframe>
où « www.b.fr » identifie le deuxième domaine de navigation.

La quatrième page est écrite, au moins partiellement, en langage HTML. Des codes de programme d'un module de réception 38 de données sont inclus dans cette quatrième page ou sont transmis par le serveur de gestion de ce deuxième domaine avec les données HTML de cette quatrième page. Ce module de réception 38 est chargé et exécuté par le module de navigation 20, c'est-à-dire que les codes de programmes du module de réception 38 sont chargés en mémoire, interprétés et exécutés par le module de navigation 20.

Il est à noter que la quatrième page ne comporte pas nécessairement d'informations à présenter à l'utilisateur, et peut donc ne pas être affichée. Dans ce cas en effet, la présentation de la troisième page n'est pas modifiée par la présence de la référence "iframe". A l'inverse, il pourrait être prévu que la présentation de la troisième page soit modifiée, par exemple par ajout d'un logo ou autre signe, indicateur de la possibilité de recevoir dans cette troisième page des données contenues dans une autre page Web.

La troisième page est utilisée par exemple pour présenter à l'utilisateur l'ensemble de données A sauvegardé localement. Pour cela, le module destinataire 36 comprend un module de lecture 37 adapté pour demander la lecture de l'ensemble de données A au module de réception 38, associé à la quatrième page et au deuxième domaine. Comme illustré à la figure 4F, le module de lecture 37 dialogue au moyen du protocole HTTP avec le module de réception 38 afin de recevoir l'ensemble de données A.

Le module de réception 38 reçoit donc du module de lecture 37 une demande de lecture de l'ensemble de données A. Le module de réception 38 comprend un sous-module, dit module de chargement local 44, conçu pour accéder à la base de données locale 40 et adapté pour obtenir des données stockées dans la base de données locale 40. Ainsi, sur interrogation de la base de données locale 40, le module de chargement local 44, associé tout comme le module de réception au deuxième domaine, peut accéder localement à l'ensemble de données A, en utilisant la base de données locale 40 compris dans le module de navigation 20. Le module de chargement local 44 transfert l'ensemble de données A au module de réception 38. Le module de lecture 37 reçoit ensuite du module de réception 38 l'ensemble de données A demandé. La base de données locale 40 étant configurée pour permettre la lecture des données enregistrées seulement sur requête de modules associé au même domaine, ou éventuellement à un sous-domaine de ce dernier, la troisième page ne peut accéder directement à l'ensemble de données A stocké par la base de données locale 40.

A titre d'exemple non limitatif, un cas d'usage va maintenant être présenté. Un utilisateur du terminal 1, par exemple un téléphone mobile, utilise le module de navigation pour accéder à un site web du domaine « www.abc.com » pour écouter de la musique. L'utilisateur ajoute la page d'accueil dudit site web à une liste de sites favoris du module de navigation, de sorte à avoir un lien vers cette page d'accueil accessible directement après chaque chargement du module de navigation. La page d'accueil détecte alors l'ajout du site à la liste des favoris. La page d'accueil incorporant par référence une page web hébergée dans le domaine « www.xyz.com », elle demande à cette dernière de stocker dans la base de données locale une information indiquant que la page d'accueil du site web « www.abc.com » a été ajoutée à la liste des favoris. Plus tard, l'utilisateur utilise le module de navigation pour accéder à une page d'accueil du site web du domaine « www.def.com ». La page d'accueil incorporant par référence une page web hébergée dans le domaine « www.xyz.com », elle demande à cette dernière de lire dans la base de données locale une information indiquant si la page d'accueil du site web « www.abc.com » a été ajoutée à la liste des favoris. En fonction du résultat obtenu, la page d'accueil peut adapter son contenu en fonction de l'information extraite.

A titre d'exemple non limitatif, un autre cas d'usage va maintenant être présenté. Un utilisateur du terminal 1, par exemple un téléphone mobile, utilise le module de navigation pour accéder à un site web du domaine « www.abc.com » pour publier des messages. Via une page web incorporée par référence et hébergée dans le domaine « www.xyz.com », chaque message après son envoi est stocké dans la base de données locale. Plus tard, l'utilisateur utilise le module de navigation pour accéder à un site web du domaine « www.def.com » de type réseau social. Via une page web incorporée par référence et hébergée dans le domaine « www.xyz.com », les messages précédemment enregistrés peuvent être affichés, par exemple dans une page décrivant le profil de l'utilisateur.

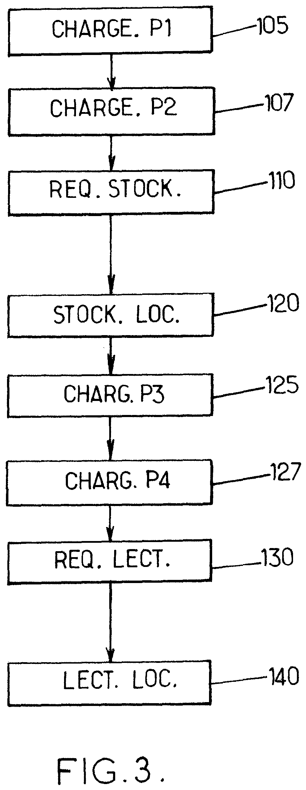

Un procédé de communication de données selon un mode de réalisation, illustré par la figure 3, va maintenant être décrit. Dans cet exemple, un ensemble de données A est transmis, depuis une première page web d'une première application web, à au moins une troisième page web d'une deuxième application web. La première et la troisième page web sont hébergées respectivement dans un premier et un troisième domaine. La première page web incorpore par référence une deuxième page web hébergée dans un deuxième domaine. La troisième page web incorpore par référence une quatrième page web hébergée également dans le deuxième domaine.

Dans une étape 105 représentée en détail à la figure 4a, la première page est chargée dans un navigateur disposant d'une base de données locale permettant :
- l'enregistrement de données par une page web ; et,
- la lecture desdites données aux pages web appartenant au même domaine que celui auquel appartient la page web ayant procédé à l'enregistrement desdites données.

Un module émetteur 32 associé à cette première page est chargé également par le navigateur.

Dans une étape 107 représentée en détail à la figure 4b, la deuxième page web, qui est incorporée par référence dans la première page, est chargée dans le navigateur du fait de la présence de cette référence dans la première page web. Un module de stockage 34 associé à cette première page est chargé également par le navigateur.

Puis, dans une étape 110 représentée en détail à la figure 4c, le module émetteur 32 émet une demande de stockage de l'ensemble de données A au module de stockage 34.

Dans une étape 120 représentée en détail à la figure 4c, le module de stockage 34 stocke localement, dans la base de données locale du navigateur, l'ensemble de données A.

Dans une étape 125 représentée en détail à la figure 4d, la troisième page web est chargée dans le navigateur ainsi qu'un module destinataire 36 associé à cette troisième page.

Dans une étape 127 représentée en détail à la figure 4e, la quatrième page web, qui est incorporée par référence dans la troisième page, est chargée dans le navigateur du fait de la présence de cette référence dans la troisième page web. Un module de réception 38 associé à cette première page est chargé également par le navigateur.

Dans une étape 130 représentée en détail à la figure 4f, le module destinataire 36 émet une demande de lecture de l'ensemble de données A au module de réception 38.

Dans une étape 140 représentée en détail à la figure 4f, le module de réception 38 lit dans la base de données locale l'ensemble de données A et transmet ce dernier au module destinataire 36.

## Revendications

1. Procédé d'émission depuis un module émetteur (32) d'un ensemble de données à destination d'un module destinataire (36), le module émetteur étant associé à un premier domaine de navigation, le module destinataire étant associé à un deuxième domaine de navigation, le module émetteur et le module destinataire étant adaptés à être chargés dans un module de navigation (20), le module de navigation disposant d'une base de données locale (40) conçue pour permettre:
• l'enregistrement de données à chaque module chargé dans le module de navigation; et,
• l'accès aux données enregistrées par un ou plusieurs modules associés à un même domaine de navigation, à tout module chargé dans le module de navigation associé également audit même domaine de navigation; comportant les étapes suivantes :
• chargement (105), par le module de navigation, d'une première page Web appartenant au premier domaine de navigation et du module émetteur;
• chargement (110), par le module de navigation, d'un module (34, 42) de stockage associé à un troisième domaine de navigation auquel est associé également un module de réception (38, 44) adapté pour permettre au module destinataire d'accéder à la base de données locale, le chargement du module de stockage étant provoqué par la présence dans la première page Web d'une référence au troisième domaine de navigation;
• stockage (120) par le module de stockage de l'ensemble de données, dans la base de données locale.

2. Procédé selon la revendication 1 dans lequel le module émetteur insère dynamiquement ladite référence dans la première page Web.

3. Procédé selon la revendication 1 dans lequel ladite référence est une référence à une deuxième page Web, contenant le code du module de stockage, destinée à être téléchargée puis interprétée par le module de navigation.

4. Procédé selon la revendication 3, dans lequel la deuxième page Web appartient au troisième domaine de navigation.

5. Procédé selon la revendication 3, dans lequel l'ensemble des données à transférer est extrait de la première page Web.

6. Programme d'ordinateur comportant des instructions pour mettre en oeuvre le procédé selon l'une quelconque des revendications 1 à 5 lorsque le programme est exécuté par un ordinateur.

7. Support d'informations lisible par un ordinateur, et comportant des instructions d'un programme d'ordinateur selon la revendication 6.

8. Procédé de réception par un module destinataire (36) d'un ensemble de données émis par un module émetteur (32), le module émetteur étant associé à un premier domaine de navigation, le module destinataire appartenant étant associé à un deuxième domaine de navigation, le module émetteur et le module destinataire étant adaptés à être chargés dans un module de navigation (20), le module de navigation disposant d'un base de données locale (40) conçue pour permettre:
• l'enregistrement de données à chaque module chargé dans le module de navigation; et,
• l'accès aux données enregistrées par un ou plusieurs modules associés à un même domaine de navigation, à tout module chargé dans le module de navigation associé également audit même domaine de navigation; comportant les étapes suivantes :
• chargement (125), par le module de navigation, d'une première page Web appartenant au deuxième domaine de navigation, et du module destinataire;
• chargement (127, 130), par le module de navigation, d'un module (38, 44) de réception associé à un troisième domaine de navigation auquel est associé également un module de stockage (34, 42) adapté pour permettre au module émetteur d'accéder à la base de données locale, le chargement du module de réception (38, 44) étant provoqué par la présence dans la première page Web d'une référence au troisième domaine de navigation;
• lecture (140) par le module de réception de l'ensemble des données reçu, dans la base de données locale.

9. Procédé selon la revendication 8 dans lequel le module destinataire insère dynamiquement ladite référence dans la première page Web.

10. Procédé selon la revendication 8 dans lequel ladite référence est une référence à une deuxième page Web, contenant le code du module de stockage, destinée à être téléchargée puis interprétée par le module de navigation.

11. Procédé selon la revendication 10, dans lequel la deuxième page Web appartient au troisième domaine de navigation.

12. Procédé selon la revendication 10, dans lequel l'ensemble des données à transférer est extrait de la première page Web.

13. Dispositif de navigation pour la mise en oeuvre d'un procédé d'émission depuis un module émetteur (32) d'un ensemble de données à destination d'un module destinataire (36), le module émetteur étant associé à un premier domaine de navigation, le module destinataire étant associé à un deuxième domaine de navigation, le dispositif de navigation comprenant un module de navigation disposant d'une base de données locale (40) conçue pour permettre:
• l'enregistrement de données à chaque module chargé dans le module de navigation; et,
• l'accès aux données enregistrées par un ou plusieurs modules associés à un même domaine de navigation, à tout module chargé dans le module de navigation associé également audit même domaine de navigation; le module de navigation comprenant:
• des moyens de chargement (105) d'une première page Web appartenant au premier domaine de navigation et du module émetteur;
• des moyens de chargement (110) d'un module (34, 42) de stockage conçu pour stocker l'ensemble de données dans la base de données locale, le module de stockage étant associé à un troisième domaine de navigation auquel est associé également un module de réception (38, 44) adapté pour permettre au module destinataire d'accéder à la base de données locale, le chargement du module de stockage étant déclenché par la présence dans la première page Web d'une référence au troisième domaine de navigation.

14. Dispositif de navigation pour la mise en oeuvre d'un procédé de réception par un module destinataire (36) d'un ensemble de données émis par un module émetteur (32), le module émetteur étant associé à un premier domaine de navigation, le module destinataire étant associé à un deuxième domaine de navigation, le dispositif de navigation comprenant un module de navigation disposant d'une base de données locale (40) conçue pour permettre:
• l'enregistrement de données à chaque module chargé dans le module de navigation; et,
• l'accès aux données enregistrées par un ou plusieurs modules associés à un même domaine de navigation, à tout module chargé dans le module de navigation associé également audit même domaine de navigation; le module de navigation comprenant:
• des moyens de chargement (125) d'une première page Web appartenant au deuxième domaine de navigation et du module destinataire;
• des moyens de chargement (127, 130) d'un module (38, 44) de réception, conçu pour lire l'ensemble des données reçu dans la base de données locale et associé à un troisième domaine de navigation auquel est associé également un module de stockage (34, 42) adapté pour permettre au module émetteur d'accéder à la base de données locale, le chargement du module de réception (38, 44) étant déclenché par la présence dans la première page Web d'une référence au troisième domaine de navigation.

## Patentansprüche

1. Verfahren zum Senden, von einem Sendermodul (32) aus, eines Datensatzes an ein Empfängermodul (36), wobei das Sendermodul einem ersten Navigationsbereich zugeordnet ist, wobei das Empfängermodul einem zweiten Navigationsbereich zugeordnet ist, wobei das Sendermodul und das Empfängermodul dafür eingerichtet sind, in ein Navigationsmodul (20) geladen zu werden, wobei das Navigationsmodul über eine lokale Datenbank (40) verfügt, die dafür ausgelegt ist:
• die Aufzeichnung von Daten jedem in das Navigationsmodul geladenen Modul zu ermöglichen; und
• den Zugriff auf die Daten, die durch ein oder mehrere Module aufgezeichnet wurden, die ein und demselben Navigationsbereich zugeordnet sind, jedem in das Navigationsmodul geladenen Modul zu ermöglichen, das ebenfalls diesem gleichen Navigationsbereich zugeordnet ist;
die folgenden Schritte umfassend:
• Laden (105), durch das Navigationsmodul, einer ersten Webseite, die zu dem ersten Navigationsbereich gehört, und des Sendermoduls;
• Laden (110), durch das Navigationsmodul, eines Speichermoduls (34, 42), das einem dritten Navigationsbereich zugeordnet ist, welchem auch ein Empfangsmodul (38, 44) zugeordnet ist, das dafür eingerichtet ist, dem Empfängermodul zu ermöglichen, auf die lokale Datenbank zuzugreifen, wobei das Laden des Speichermoduls durch das Vorhandensein, in der ersten Webseite, eines Verweises auf den dritten Navigationsbereich hervorgerufen wird;
• Speicherung (120), durch das Speichermodul, des Datensatzes in der lokalen Datenbank.

2. Verfahren nach Anspruch 1, wobei das Sendermodul den Verweis dynamisch in die erste Webseite einfügt.

3. Verfahren nach Anspruch 1, wobei der Verweis ein Verweis auf eine den Code des Speichermoduls enthaltende zweite Webseite ist, die dazu bestimmt ist, heruntergeladen und anschließend von dem Navigationsmodul interpretiert zu werden.

4. Verfahren nach Anspruch 3, wobei die zweite Webseite zu dem dritten Navigationsbereich gehört.

5. Verfahren nach Anspruch 3, wobei der zu übertragende Datensatz aus der ersten Webseite extrahiert wird.

6. Computerprogramm, welches Anweisungen zum Durchführen des Verfahrens nach einem der Ansprüche 1 bis 5, wenn das Programm von einem Computer ausgeführt wird, umfasst.

7. Computerlesbarer Informationsträger, welcher Anweisungen eines Computerprogramms nach Anspruch 6 enthält.

8. Verfahren zum Empfang, durch ein Empfängermodul (36), eines Datensatzes, der von einem Sendermodul (32) gesendet wurde, wobei das Sendermodul einem ersten Navigationsbereich zugeordnet ist, wobei das zugehörige Empfängermodul einem zweiten Navigationsbereich zugeordnet ist, wobei das Sendermodul und das Empfängermodul dafür eingerichtet sind, in ein Navigationsmodul (20) geladen zu werden, wobei das Navigationsmodul über eine lokale Datenbank (40) verfügt, die dafür ausgelegt ist:
• die Aufzeichnung von Daten jedem in das Navigationsmodul geladenen Modul zu ermöglichen; und
• den Zugriff auf die Daten, die durch ein oder mehrere Module aufgezeichnet wurden, die ein und demselben Navigationsbereich zugeordnet sind, jedem in das Navigationsmodul geladenen Modul zu ermöglichen, das ebenfalls diesem gleichen Navigationsbereich zugeordnet ist;
die folgenden Schritte umfassend:
• Laden (125), durch das Navigationsmodul, einer ersten Webseite, die zu dem zweiten Navigationsbereich gehört, und des Empfängermoduls;
• Laden (127, 130), durch das Navigationsmodul, eines Empfangsmoduls (38, 44), das einem dritten Navigationsbereich zugeordnet ist, welchem auch ein Speichermodul (34, 42) zugeordnet ist, das dafür eingerichtet ist, dem Sendermodul zu ermöglichen, auf die lokale Datenbank zuzugreifen, wobei das Laden des Empfangsmoduls (38, 44) durch das Vorhandensein, in der ersten Webseite, eines Verweises auf den dritten Navigationsbereich hervorgerufen wird;
• Lesen (140), durch das Empfangsmodul, des empfangenen Datensatzes in der lokalen Datenbank.

9. Verfahren nach Anspruch 8, wobei das Empfängermodul den Verweis dynamisch in die erste Webseite einfügt.

10. Verfahren nach Anspruch 8, wobei der Verweis ein Verweis auf eine den Code des Speichermoduls enthaltende zweite Webseite ist, die dazu bestimmt ist, heruntergeladen und anschließend von dem Navigationsmodul interpretiert zu werden.

11. Verfahren nach Anspruch 10, wobei die zweite Webseite zu dem dritten Navigationsbereich gehört.

12. Verfahren nach Anspruch 10, wobei der zu übertragende Datensatz aus der ersten Webseite extrahiert wird.

13. Navigationsvorrichtung zur Durchführung eines Verfahrens zum Senden, von einem Sendermodul (32) aus, eines Datensatzes an ein Empfängermodul (36), wobei das Sendermodul einem ersten Navigationsbereich zugeordnet ist, wobei das Empfängermodul einem zweiten Navigationsbereich zugeordnet ist, wobei die Navigationsvorrichtung ein Navigationsmodul umfasst, das über eine lokale Datenbank (40) verfügt, die dafür ausgelegt ist:
• die Aufzeichnung von Daten jedem in das Navigationsmodul geladenen Modul zu ermöglichen; und
• den Zugriff auf die Daten, die durch ein oder mehrere Module aufgezeichnet wurden, die ein und demselben Navigationsbereich zugeordnet sind, jedem in das Navigationsmodul geladenen Modul zu ermöglichen, das ebenfalls diesem gleichen Navigationsbereich zugeordnet ist;
wobei das Navigationsmodul umfasst:
• Mittel zum Laden (105) einer ersten Webseite, die zu dem ersten Navigationsbereich gehört, und des Sendermoduls;
• Mittel zum Laden (110) eines Speichermoduls (34, 42), das dafür ausgelegt ist, den Datensatz in der lokalen Datenbank zu speichern, wobei das Speichermodul einem dritten Navigationsbereich zugeordnet ist, welchem auch ein Empfangsmodul (38, 44) zugeordnet ist, das dafür eingerichtet ist, dem Empfängermodul zu ermöglichen, auf die lokale Datenbank zuzugreifen, wobei das Laden des Speichermoduls durch das Vorhandensein, in der ersten Webseite, eines Verweises auf den dritten Navigationsbereich ausgelöst wird.

14. Navigationsvorrichtung zur Durchführung eines Verfahrens zum Empfang, durch ein Empfängermodul (36), eines Datensatzes, der von einem Sendermodul (32) gesendet wurde, wobei das Sendermodul einem ersten Navigationsbereich zugeordnet ist, wobei das Empfängermodul einem zweiten Navigationsbereich zugeordnet ist, wobei die Navigationsvorrichtung ein Navigationsmodul umfasst, das über eine lokale Datenbank (40) verfügt, die dafür ausgelegt ist:
• die Aufzeichnung von Daten jedem in das Navigationsmodul geladenen Modul zu ermöglichen; und
• den Zugriff auf die Daten, die durch ein oder mehrere Module aufgezeichnet wurden, die ein und demselben Navigationsbereich zugeordnet sind, jedem in das Navigationsmodul geladenen Modul zu ermöglichen, das ebenfalls diesem gleichen Navigationsbereich zugeordnet ist;
wobei das Navigationsmodul umfasst:
• Mittel zum Laden (125) einer ersten Webseite, die zu dem zweiten Navigationsbereich gehört, und des Empfängermoduls;
• Mittel zum Laden (127, 130) eines Empfangsmoduls (38, 44), das dafür ausgelegt ist, den empfangenen Datensatz in der lokalen Datenbank zu lesen, und einem dritten Navigationsbereich zugeordnet ist, welchem auch ein Speichermodul (34, 42) zugeordnet ist, das dafür eingerichtet ist, dem Sendermodul zu ermöglichen, auf die lokale Datenbank zuzugreifen, wobei das Laden des Empfangsmoduls (38, 44) durch das Vorhandensein, in der ersten Webseite, eines Verweises auf den dritten Navigationsbereich ausgelöst wird.

## Claims

1. Method for transmitting a data set from a transmitting module (32) to a destination module (36), the transmitting module being associated with a first browsing domain, the destination module being associated with a second browsing domain, the transmitting module and the destination module being adapted to be loaded into a browser module (20), the browser module having access to a local database (40) designed to allow:
• data recording to each module loaded into the browser module; and,
• access to the data recorded by one or more modules associated with a single browsing domain, to any module loaded into the browsing module also associated with said single browsing domain;
comprising the following steps:
• loading (105), by the browser module, of a first web page belonging to the first browsing domain and of the transmitting module;
• loading (110), by the browser module, of a storage module (34, 42) associated with a third browsing domain with which is also associated a receiving module (38, 44) adapted to allow the destination module to access the local database, the loading of the storage module being provoked by the presence in the first web page of a reference to the third browsing domain;
• storage (120) by the storage module of the data set in the local database.

2. Method according to Claim 1, wherein the transmitting module dynamically inserts said reference into the first web page.

3. Method according to Claim 1, wherein said reference is a reference to a second web page, containing the code of the storage module, intended to be downloaded and then interpreted by the browser module.

4. Method according to Claim 3, wherein the second web page belongs to the third browsing domain.

5. Method according to Claim 3, wherein the data set to be transferred is extracted from the first web page.

6. Computer program comprising instructions for implementing the method according to any one of Claims 1 to 5 when the program is executed by a computer.

7. Data medium, readable by a computer, and comprising instructions of a computer program according to Claim 6.

8. Method of receiving, by a destination module (36), a data set transmitted by a transmitting module (32), the transmitting module being associated with a first browsing domain, the appertaining destination module being associated with a second browsing domain, the transmitting module and the destination module being adapted to be loaded into a browser module (20), the browser module having access to a local database (40) designed to allow:
• recording of data to each module loaded in the browser module; and,
• access to the data recorded by one or more modules associated with a single browsing domain, to any module loaded in the browsing module also associated with said single browsing domain;
comprising the following steps:
• loading (125), by the browser module, of a first web page belonging to the second browsing domain, and of the destination module;
• loading (127, 130), by the browser module, of a receiving module (38, 44) associated with a third browsing domain with which is also associated a storage module (34, 42) adapted to allow the transmitting module to access the local database, the loading of the receiving module (38, 44) being provoked by the presence in the first web page of a reference to the third browsing domain;
• reading (140) by the receiving module of the received data set in the local database.

9. Method according to Claim 8, wherein the destination module dynamically inserts said reference into the first web page.

10. Method according to Claim 8, wherein said reference is a reference to a second web page containing the code of the storage module, intended to be downloaded and then interpreted by the browser module.

11. Method according to Claim 10, wherein the second web page belongs to the third browsing domain.

12. Method according to Claim 10, wherein the data set to be transferred is extracted from the first web page.

13. Browser device for the implementation of a method for transmitting a data set from a transmitting module (32) to a destination module (36), the transmitting module being associated with a first browsing domain, the destination module being associated with a second browsing domain, the browser device comprising a browser module having access to a local database (40) designed to allow:
• recording of data to each module loaded in the browser module; and,
• access to the data recorded by one or more modules, associated with a single browsing domain, to any module loaded in the browser module also associated with said single browsing domain;
the browser module comprising:
• means of loading (105) a first web page, belonging to the first browsing domain, and the transmitting module;
• means of loading (110) a storage module (34, 42) designed to store the data set in the local database, the storage module being associated with a third browsing domain with which there is also associated a receiving module (38, 44) adapted to allow the destination module to access the local database, the loading of the storage module being initiated by the presence in the first web page of a reference to the third browsing domain.

14. Browser device for the implementation of a method for receiving, by a destination module (36), a data set transmitted by a transmitting module (32), the transmitting module being associated with a first browsing domain, the destination module being associated with a second browsing domain, the browser device comprising a browser module having access to a local database (40) designed to allow:
• recording of data to each module loaded in the browser module; and,
• access to the data recorded by one or more modules associated with a single browsing domain, to any module loaded in the browser module also associated with said single browsing domain;
the browser module comprising:
• means of loading (125) a first web page, belonging to the second browsing domain, and of the destination module;
• means of loading (127, 130) a receiving module (38, 44), designed to read the data set received in the local database and associated with a third browsing domain with which is also associated a storage module (34, 42) designed to allow the transmitting module to access the local database, the loading of the receiving module (38, 44) being initiated by the presence in the first web page of a reference to the third browsing domain.
